Europäisches Patentamt

European Patent Office

Office européen des brevets

(19)

(11) Veröffentlichungsnummer: **0 211 838 B1**

(12) **EUROPÄISCHE PATENTSCHRIFT**

(45) Veröffentlichungstag der Patentschrift:
**26.10.88**

(21) Anmeldenummer: **85902034.9**

(22) Anmeldetag: **25.04.85**

(86) Internationale Anmeldenummer:
**PCT/EP 85/00186**

(87) Internationale Veröffentlichungsnummer:
**WO 85/05062 (21.11.85 Gazette 85/25)**

(51) Int. Cl.⁴: **B 27 B 1/00, B 27 B 33/20, B 27 B 5/34, B 27 L 11/00**

(54) **SÄGE- UND ZERSPANUNGSEINRICHTUNG FÜR HOLZSTÄMME.**

(30) Priorität: **28.04.84 DE 3415931**

(43) Veröffentlichungstag der Anmeldung:
**04.03.87 Patentblatt 87/10**

(45) Bekanntmachung des Hinweises auf die Patenterteilung:
**26.10.88 Patentblatt 88/43**

(84) Benannte Vertragsstaaten:
**AT DE SE**

(56) Entgegenhaltungen:
**CH - A - 415 012**
**DE - A - 2 166 292**
**DE - A - 3 312 033**
**FR - A - 2 455 961**

(73) Patentinhaber: **Gebrüder Linck, Maschinenfabrik "Gatterlinck" GmbH & Co.KG, Appenweierer Strasse 46, D-7602 Oberkirch (DE)**

(72) Erfinder: **Der Erfinder hat auf seine Nennung verzichtet**

(74) Vertreter: **Katscher, Helmut, Dipl.-Ing., Bismarckstrasse 29, D-6100 Darmstadt (DE)**

## Beschreibung

Die Erfindung betrifft eine Säge- und Zerspanungseinrichtung für Holzstämme, mit mindestens einem Messerkopf als Zerspanungswerkzeug zur Erzeugung von Hackschnitzeln und mindestens einem in axialem Abstand dazu angeordneten mit einer Sägewelle verbundenen ersten Kreissägeblatt zum Absägen mindestens eines Seitenbrettes, wobei der Messerkopf mit einer Hohlwelle verbunden ist, in der die Sägewelle gleichachsig drehbar und axial verstellbar gelagert ist.

Bei der Verarbeitung von Rundholzstämmen zu Nutzholz, wie Brettern und Kantholz ist es bekannt, im sogenannten Profilzerspanungsverfahren die aussenliegenden Holzteile, die als Schwarten anfallen würden, mittels Messerköpfen zu Hackschnitzeln zu zerspanen, die beispielsweise für die Spanplattenherstellung oder für die Zelluloseherstellung geeignet sind.

Bei einer bekannten Vorichtung (DE-A-2 947 190) sind zwei gegenüberliegende Messerköpfe und mehrere dazwischenliegende Kreissägeblätter auf einer gemeinsamen Welle angeordnet. Hierbei tritt jedoch die Schwierigkeit auf, dass die Messerköpfe zur Erzielung von Hackschnitzeln ausreichender Faserlänge mit einer verhältnismässig niedrigen Drehzahl angetrieben werden müssen, während für den Antrieb der Kreissägeblätter mit Rücksicht auf die geforderte Sägequalität eine ausreichend hohe Drehzahl erforderlich ist. Beide Anforderungen lassen sich bei der bekannten Vorrichtung nicht gleichzeitig erfüllen, so dass im allgemeinen eine zu hohe Drehzahl der Messerköpfe und damit eine für den gewünschten Zweck ungenügende Qualität der erzeugten Hackschnitzel in Kauf genommen werden müssen.

Ausserdem sind bei der bekannten Vorrichtung die Kreissägeblätter starr auf der gemeinsamen Antriebswelle angeordnet, so dass nur Bretter oder Kanthölzer gleichbleibender Breite erzeugt werden können. Eine Anpassung an unterschiedliche gewünschte Abmessungen ist nicht oder nur durch einen aufwendigen Umbau der Vorrichtung möglich.

Es war bereits seit längerem bekannt (DE-A-2 010 060), den Sägevorgang für die Erzeugung des oder der Seitenbretter zwar gleichzeitig, jedoch unabhängig von dem Zerspanungsvorgang durchzuführen. Bei der bekannten Vorrichtung werden hierfür Bandsägen oder Gattersägen verwendet, die auch eine Breitenverstellung ermöglichen. Die Vorschubgeschwindigkeit der Holzstämme muss hierbei jedoch in Anpassung an die Anforderungen der Sägeblätter verhältnismässig gering gewählt werden, was wiederum für den Zerspanungsvorgang nachteilig ist.

Die für die Hackschnitzelerzeugung durch die Zerspanungswerkzeuge mögliche, verhältnismässig hohe Vorschubgeschwindigkeit der Holzstämme, die auch aus Gründen hoher Arbeitskapazität erwünscht ist, macht es erforderlich, das Absägen des Seitenbrettes bzw. der Seitenbretter mittels schnelllaufender Kreissägen durchzuführen, die überlicherweise in grösserem Abstand zu den Zerspanungswerkzeugen in Vorschubrichtung der Holzstämme angeordnet sind, beispielsweise paarweise übereinander und ersetzt zueinander angeordnete Doppelkreissägen. Bei dieser Anordnung lassen sich bei hoher Vorschubgeschwindigkeit der Holzstämme die Drehzahlen der Messerköpfe und der Kreissägeblätter zwar jeweils optimal wählen, jedoch bedingt die räumliche Trennung der Messerköpfe und der Kreissägeblätter unvermeidbare Ungenauigkeiten insbesondere für die Dicke des abzusägenden Seitenbrettes. Nur mit aufwendigen Führungsmassnahmen kann sichergestellt werden, dass die durch die Kreissägeblätter gesägte Fläche des Seitenbretts ausreichend parallel zu der vorher durch den Messerkopf erzeugten ebenen Fläche ist (DE-A-2 918 622).

Bei einer bekannten Säge- und Zerspanungseinrichtung der eingangs genannten Gattung (DE-A-3 312 033, Fig. 13) ist in axialem Abstand vor dem Messerkopf ein axial verstellbares, gesondert angetriebenes Kreissägeblatt angeordnet. Die Sägewelle, die dieses Kreissägeblatt trägt, ist bei dieser Ausführungsform in einem im Inneren der Hohlwelle liegenden starren Lagerkörper gelagert, wobei die Lagerung der Sägewelle exzentrisch zu der den Messerkopf tragenden Hohlwelle liegt. Diese bekannte Vorrichtung ist von verhältnismässig kompliziertem Aufbau, weil einerseits eine Lagerung der den Messerkopf tragenden Hohlwelle auf dem starren Lagerkörper und andererseits eine Lagerung der das Kreissägeblatt tragenden Sägewelle in diesem starren Lagerkörper erforderlich ist und weil gesonderte Antriebseinrichtungen für den Messerkopf und die Sägewelle erforderlich sind. Das abgesägte Seitenbrett weist auf seiner Aussenseite eine durch den Messerkopf erzeugte Fläche mit Einrissen und dgl. auf.

Bei einer anderen Ausführungsform nach Fig. 2 der DE-A-3 312 033 ist in der Hohlwelle des Messerkopfes eine Welle gleichachsig und axial verschiebbar gelagert, die ein zusätzliches Werkzeug trägt, das durch ein Kreissägeblatt ersetzt werden kann.

Ausgehend von dem aus der DE-A-3 312 033 bekannten Stand der Technik besteht die Aufgabe der Erfindung darin, eine Säge- und Zerspannungseinrichtung der Gattung nach dem Oberbegriff des Patentanspruchs 1 zu schaffen, die mit geringem Bauaufwand und bei kompakter Bauweise eine optimale Wahl der Drehzahlen des Messerkopfes und des ersten Kreissägeblattes ermöglicht.

Diese Aufgabe wird erfindungsgemäss dadurch gelöst, dass die Hohlwelle und die Sägewelle mit einem gemeinsamen Antriebsmotor über zwei Getriebezüge mit unterschiedlichem Übersetzungsverhältnis verbunden sind, so dass die Sägewelle mit höherer Drehzahl als die Hohlwelle angetrieben wird, und dass an der dem ersten Kreissägeblatt zugekehrten Stirnseite des Messerkopfes ein zweites Kreissägeblatt befestigt ist.

Durch den gemeinsamen Antriebsmotor, der die Sägewelle mit höherer Drehzahl als die der Hohlwelle des Messerkopfes antreibt, kann für beide unterschiedliche Bearbeitungsvorgänge die jeweils optimale Drehzahl gewählt werden, so dass bei hoher Vorschubgeschwindigkeit des Holzstammes einerseits Hackschnitzel mit ausreichend grosser Faserlänge erzeugt und andererseits eine hohe Arbeitsgüte des Sägeschnitts erreicht wird; hierfür sind jedoch keine getrennten Antriebseinrichtungen erforderlich. Der konstruktive Aufbau ist kompakt und wenig störanfällig.

Da der Sägeschnitt des zweiten Kreissägeblattes, der die äussere ebene Fläche ergibt, gleichzeitig und in räumlicher Nähe zu dem Sägeschnitt des ersten Kreissägeblattes erfolgt, ist sichergestellt, dass die beiden so erzeugten Seitenflächen des Seitenbrettes parallel und die Dicke des Seitenbrettes gleichbleibend sind.

Wenn vorstehend als Einsatzgebiet der erfindungsgemässen Einrichtung die Bearbeitung von Holzstämmen genannt wurde, so ist darunter die Bearbeitung von Rundholzstämmen auf zwei gegenüberliegenden Seiten und ebenso die Bearbeitung von Modeln zu verstehen, die bereits zweiseitig angeflacht wurden und anschliessend an den beiden anderen, einander gegenüberliegenden Seiten bearbeitet werden.

Es ist zwar bekannt (DE-C-2 158 912), einen Messerkopf zum Profilzerspanen der Seitenfläche eines Holzstammes an einer Hohlwelle anzubringen, die ein Kreissägeblatt trägt. Hierbei liegt das Kreissägeblatt jedoch in der Stirnfläche des Messerkopfes und dient nicht zum Absägen eines Seitenbrettes, sondern nur zum Schlichten der durch den Messerkopf erzeugten Fläche. Eine axiale Verstellung des Kreissägeblattes ist nicht vorgesehen und wäre hierbei auch nicht sinnvoll.

Axial verstellbare, auf koaxial zueinander angeordneten Hohlwellen angeordnete Kreissägen sind in unterschiedlichen Ausführungsformen bekannt (US-A-3 630 244). Diese bekannten Vorrichtungen dienen jedoch nur der Querverstellung der Kreissägeblätter; sie weisen keine Messerköpfe als Zerspanungswerkzeuge auf. Die so verstellbaren Kreissägeblätter werden von einem gemeinsamen Antrieb mit gleicher Drehzahl angetrieben.

Um eine rasche und einfache Anpassung an unterschiedliche Abmessungen des Hohlstammes zu ermöglichen, kann ein die Lagerung der Hohlwelle tragender Schlitten quer zur Transportrichtung der Holzstämme verstellbar in einem Maschinengestell geführt sein.

Die Erfindung wird nachfolgend an einem Ausführungsbeispiel näher erläutert, das in der Zeichnung dargestellt ist. Es zeigt:

Fig. 1 teilweise im Schnitt eine Säge- und Zerspanungseinrichtung für Holzstämme und

Fig. 2 eine Seitenansicht in Richtung des Pfeiles II in Fig. 1.

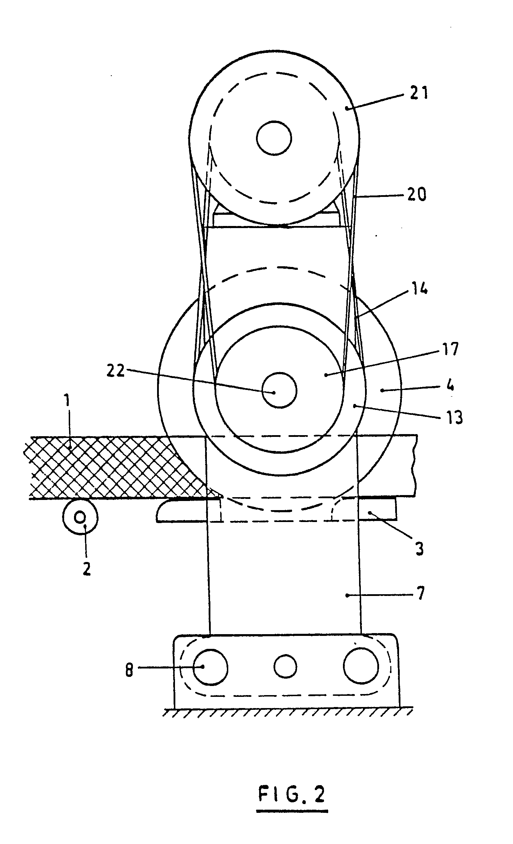

Die in der Zeichnung dargestellte Säge- und Zerspanungseinrichtung dient beim dargestellten Ausführungsbeispiel zur Bearbeitung der gegenüberliegenden Seiten eines Models 1, dessen Oberseite und dessen Unterseite bereits angeflacht sind. Durch eine Vorschub- und Transporteinrichtung, von der in Fig. 2 nur eine Transportwalze 2 angedeutet ist, wird das nachfolgend allgemein als Holzstamm bezeichnete Model 1 über eine Auflage 3 geführt. Beiderseits der Auflage 3 ist jeweils ein mit Hackmessern bestückter Messerkopf 4 angeordnet, der dazu dient, die seitlichen Teile 1a des Holzstammes 1 zu Hackschnitzeln zu zerspanen.

Der Messerkopf 4 ist an einer Hohlwelle 5 befestigt, die mittels Lagern 6 in einem Schlitten 7 drehbar gelagert ist. Der Schlitten 7 ist auf Führungen 8 quer zur Transportrichtung des Holzstammes 1 verstellbar geführt.

In der Hohlwelle 5 des Messerkopfes 4 ist auf Lagern 9 eine Sägewelle 10 drehbar und axial verschiebbar gelagert. Die Sägewelle 10 trägt an ihrem freien Ende ein Kreissägeblatt 11, das dazu dient, von dem Holzstamm 1 ein Seitenbrett 1b abzusägen. An der dem Kreissägeblatt 11 zugekehrten Stirnfläche ist am Messerkopf 4 ein weiteres Kreissägeblatt 12 befestigt, das dazu dient, die Aussenfläche des Seitenbrettes 1b zu schlichten.

Am Ende der Hohlwelle 5 ist eine Riemenscheibe 13 befestigt, die über einen Riementrieb 14 mit einer Riemenscheibe 15 auf der Ausgangswelle eines Antriebsmotors 16 verbunden ist, der vom Schlitten 7 getragen wird.

Eine Riemenscheibe 17, deren Durchmesser kleiner ist als der der Riemenscheibe 13, ist am hinteren Ende der Hohlwelle 5 mittels eines Lagers 18 drehbar gelagert und steht über eine Passfeder 19 mit der Sägewelle 10 in Antriebsverbindung, wobei jedoch eine axiale Relativbewegung möglich ist. Die Riemenscheibe 17 ist über einen Riementrieb 20 mit einer Riemenscheibe 21 auf der Ausgangswelle des Antriebsmotors 16 verbunden. Der Durchmesser der Riemenscheibe 21 ist grösser als der der Riemenscheibe 15.

Durch die beschriebene Durchmesserwahl der Riemenscheiben 13, 15, 17 und 21 wird erreicht, dass durch den gemeinsamen Antriebsmotor 16 die Sägewelle 10 mit höherer Drehzahl angetrieben wird als die Hohlwelle 5. Die Sägewelle 10 erhält auf diese Weise eine für einen optimalen Sägevorgang des Kreissägeblattes 11 erforderliche, verhältnismässig hohe Drehzahl, während der Messerkopf 4 mit der für die Erzeugung des Hackschnitzel optimalen, verhältnismässig niedrigen Drehzahl angetrieben wird.

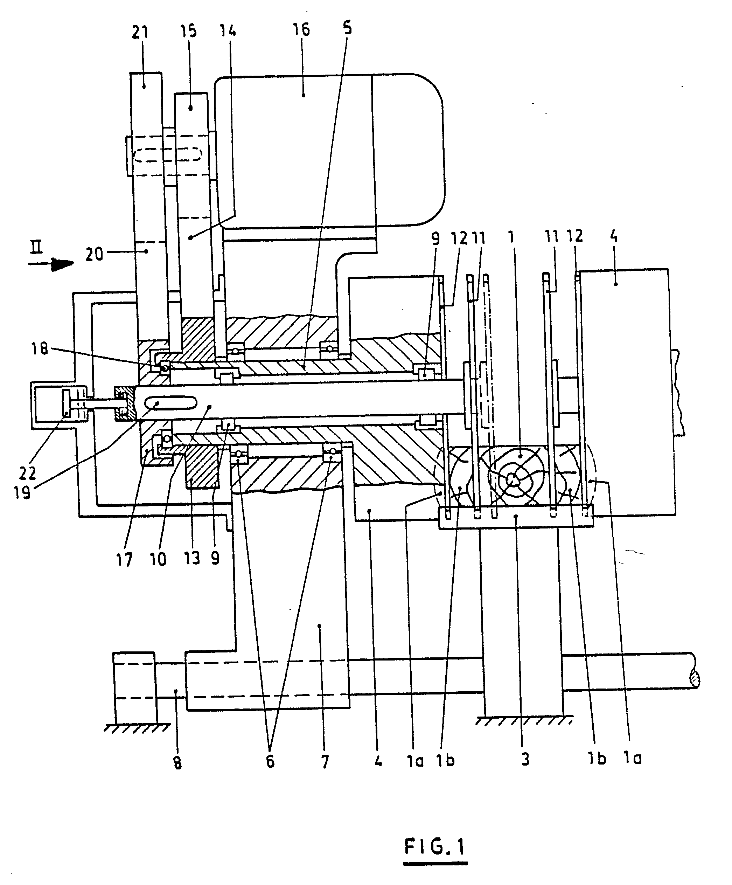

Mittels einer in Fig. 1 nur angedeuteten druckmittelbetätigten Kolben-Zylinder-Einheit 22 kann die Sägewelle 10 axial verschoben werden, um unterschiedlich dicke Seitenbretter 1b abzusägen, wie in Fig. 1 mit strichpunktierten Linien angedeutet ist.

Der Antrieb und die Verstellung des auf der gegenüberliegenden Seite des Holzstammes 1 angeordneten Kreissägeblattes 11 und des Messerkopfes 4 erfolgt in gleicher Weise, wie beschrieben; die hierfür verwendete, in der beschriebenen Art aufgebaute Einrichtung wurde deshalb in Fig. 1 weggelassen.

Bei dem dargestellten Ausführungsbeispiel ist der Flugkreisdurchmesser des Kreissägeblattes 11 angenähert gleich dem Flugkreisdurchmesser des Messerkopfes 4 bzw. des daran angebrachten Kreissägeblattes 12. Der Flugkreisdurchmesser des Kreissägeblatts 11 kann auch kleiner als der des zugeordneten Messerkopfes 4 gewählt werden, damit das Kreissägeblatt 11 noch schneidet, wenn der Messerkopf 4 bzw. das daran angebrachte Kreissägeblatt 12 bereits ausser Eingriff mit dem Holz ist.

## Patentansprüche

1. Säge- und Zerspanungseinrichtung für Holzstämme, mit mindestens einem Messerkopf (4) als Zerspanungswerkzeug zur Erzeugung von Hackschnitzeln und mindestens einem in axialem Abstand dazu angeordneten, mit einer Sägewelle (10) verbundenen ersten Kreissägeblatt (11) zum Absägen mindestens eines Seitenbrettes, wobei der Messerkopf (4) mit einer Hohlwelle (5) verbunden ist, in der die Sägewelle (10) gleichachsig drehbar und axial verstellbar gelagert ist, dadurch gekennzeichnet, dass die Hohlwelle (5) und die Sägewelle (10) mit einem gemeinsamen Antriebsmotor (16) über zwei Getriebezüge (13, 14, 15 bzw. 17, 20, 21) mit unterschiedlichem Übersetzungsverhältnis verbunden sind, so dass die Sägewelle (10) mit höherer Drehzahl als die Hohlwelle (5) angetrieben wird, und dass an der dem ersten Kreissägeblatt (11) zugekehrten Stirnseite des Messerkopfes (4) ein zweites Kreissägeblatt (12) befestigt ist.

2. Säge- und Zerspanungseinrichtung nach Anspruch 1, dadurch gekennzeichnet, dass ein die Lagerung (6) der Hohlwelle (5) tragender Schlitten (7) quer zur Transportrichtung der Holzstämme (1) verstellbar in einem Maschinengestell geführt ist.

**Claims**

1. Sawing and cutting installation for tree trunks, having at least one knife head (4) as a cutting tool for the production of wood chips and at least one first circular saw blade (11) arranged at an axial distance from it, connected to a saw shaft (10) for sawing off at least one side board, the knife head (4) being connected to a hollow shaft (5) in which the saw shaft (10) is supported, rotatable about the same axis and axially adjustably, characterised by the fact that the hollow shaft (5) and the saw shaft (10) are connected to a common drive motor (16) through two trains of gears (13, 14, 15 or 17, 20, 21) at a different transmission ratio, so that the saw shaft (10) is started up at a higher rotation speed than the hollow shaft (5), and that a second circular saw blade (12) is affixed to the front side of the knife head (4) turned towards the first circular saw blade (11).

2. Sawing and cutting installation according to Claim 1, characterised by the fact that a carriage (7) supporting the bearing (6) of the carriage (7) carrying the hollow shaft (5) is guided transversely to the transport direction of the tree trunks 61) adjustably in a machine frame.

**Revendications**

1. Installation de sciage et de coupe pour troncs d'arbre, comportant au moins une tête à couteaux (4) à titre d'outil de coupe pour la production de copeaux hachés et au moins une première lame de scie circulaire (11) écartée axialement de celle-ci, reliée à un arbre de scie (10) et destinée à scier au moins une planche latérale, la tête à couteaux (4) étant reliée à un arbre creux (5) dans lequel l'arbre de scie (10) est logé de manière à pouvoir tourner coaxialement et de manière axialement déplaçable, caractérisée en ce que l'arbre creux (5) et l'arbre de scie (10) sont reliés à un moteur d'entraînement (16) commun, via deux trains d'engrenages (13, 14, 15 et 17, 20, 21) ayant des rapports de transmission différents, de telle sorte que l'arbre de scie (10) est entraîné à une vitesse de rotation supérieure à celle de l'arbre creux (5) et en ce qu'une deuxième lame de scie circulaire (12) est montée sur la face frontale de la tête à couteaux (4) orientée vers la première lame de scie circulaire (11).

2. Installation de sciage et de coupe selon la revendication 1, caractérisé en ce qu'un chariot (7) portant le logement (6) de l'arbre creux (5) est guidé dans un bâti de machine, en étant réglable dans la direction transversale par rapport à la direction de transport des troncs d'arbre (1).

FIG.1

FIG. 2